# EUROPEAN PATENT APPLICATION

(11) **EP 4 693 847 A1**
(43) Date of publication of application: **11.02.2026**
(21) Application number: 24780132.7
(22) Date of filing: 25.03.2024
(51) Int. Cl.: H02K 15/06, H02K 15/04

(54) **TRACEABILITY MANAGEMENT METHOD AND DEVICE, SEGMENT COIL, AND STATOR**

(30) Priority: 31.03.2023 JP 2023058830; 04.04.2023 JP 2023061013
(71) Applicant: NHK Spring Co., Ltd., Yokohama-shi, Kanagawa 236-0004 (JP)
(72) Inventor: OKUBO, Shuhei, Yokohama-shi Kanagawa 236-0004 (JP)
(74) Representative: Oppermann, Frank
(86) International application number: PCT/JP2024/011599
(87) International publication number: WO 2024/204014

(57) **Abstract**

Provided is a traceability management method capable of managing traceability of a segment coil inserted into slots leading to the slots. The traceability management method for a stator of a rotating electrical machine in which coil ends 7a with no insulating layer 7c in segment coils 7 inserted into slots are joined together, includes reading information from information-indicating parts 11 being provided on the coil ends 7a and including the information involved in manufacturing of the segment coils 7, and performing management of traceability of the inserted segment coils 7 leading to the slots according to information involved in the slots and the information read in the reading step S2.

## Description

### FIELD OF THE INVENTION

The present invention relates to traceability management method and device related to manufacturing of a stator of a rotating electrical machine, a segment coil, and a stator.

### BACKGROUND OF THE INVENTION

Conventionally, there is a technique disclosed in Patent literature 1 for a segment coil of a rotating electrical machine and the like.

The technique of Patent literature 1 indicates identification information associated with a manufacturing line or the like on each of segment coils. It allows a cause of quality deterioration to be found out in a shortest time if a segment coil quality of which does not meet criteria is found.

The technique of Patent literature 1, however, indicates the identification information on an insulating layer of the segment coil. Accordingly, the identification information causes the quality of the segment coil to be deteriorated.

### CITATION LIST

### PATENT LITERATURE

PATENT LITERATURE 1: JP2021-40457A

### SUMMARY OF THE INVENTION

### PROBLEMS TO BE SOLVED BY THE INVENTION

A problem to be solved is that identification information of a segment coil causes quality of the segment coil to be deteriorated.

### MEANS FOR SOLVING THE PROBLEM

The present invention provides a traceability management method for a stator of a rotating electrical machine in which coil ends with no insulating layer in segment coils inserted into slots are joined together. The traceability management method reads information from information-indicating parts being provided on the coil ends and including the information involved in manufacturing of the segment coils, and performs management of traceability of the inserted segment coils leading to the slots according to information involved in the slots and the read information.

Further, the present invention provides a traceability management device for a stator of a rotating electrical machine in which coil ends with no insulating layer in segment coils inserted into slots are joined together. The traceability management device includes a reading part that reads information from information-indicating parts being provided on the coil ends and including the information involved in manufacturing of the segment coils, and a management part that performs management of traceability of the inserted segment coils leading to the slots according to information involved in the slots and the information read by the reading part.

Further, the present invention provides a segment coil including a coil end with no insulating layer, and an information-indicating part being provided on a surface of the coil end.

Further, the present invention provides a stator of a rotating electrical machine, in which the segment coils are arranged in respective slots of a stator core, and adjacent coil ends with no insulating layer in the arranged segment coils are joined together, and part or all of the information-indicating parts are caused to vanish by the joining of the coil ends.

### EFFECT OF THE INVENTION

The traceability management method and device according to the present invention perform management of traceability of the segment coils inserted into the slots leading to the slots. Further, since the information-indicating part is provided on the coil end with no insulating layer, it suppresses quality deterioration of the segment coil.

The segment coil according to the present invention is suppressed from damage of an insulating layer at the time of setting of the information-indicating part and is suppressed from quality deterioration thereof. Further, the information-indicating part is provided on the coil end itself with no insulating layer, thereby easily suppressing damage of the information-indicating part.

The stator of a rotating electrical machine according to the present invention improves security on account of vanishment of the part or all of the information-indicating part according to the joining of the coil ends.

### BRIEF DESCRIPTION OF THE DRAWINGS

[FIG. 1] FIG. 1 is a perspective view of a stator of a rotating electrical machine according to an embodiment.
[FIG. 2] FIG. 2 is an exploded perspective view of the stator of FIG. 1.
[FIG. 3] FIG. 3 is an enlarged perspective view illustrating coil ends of a stator coil of FIG. 1.
[FIG. 4] FIG. 4 is an enlarged perspective view illustrating welding of the coil ends of FIG. 3.
[FIG. 5] FIG. 5 is a perspective view of a segment coil used for the stator of FIG. 1.
[FIG. 6] FIG. 6 is an enlarged plan view illustrating a coil end of the segment coil of FIG. 5.
[FIG. 7] FIG. 7 is a schematic process diagram until the segment coil is manufactured and stored in a cassette.
[FIG. 8] FIG. 8 is a schematic process diagram when assembling the stator of a rotating electrical machine using segment coils on the cassette.

### EMBODIMENT FOR CARRYING OUT THE INVENTION

The object of suppressing quality deterioration of a segment coil while managing traceability of the segment coil inserted into slots leading to the slots is achieved by adding information involved in manufacturing of the segment coil on a coil end with no insulating layer of the segment coil.

A traceability management method is for a stator 1 of a rotating electrical machine in which coil ends 7a with no insulating layer 7c in segment coils 7 inserted into slots 3b are joined together. This traceability management method reads information involved in manufacturing of the segment coil 7 from information-indicating parts 11 being provided on the coil ends 7a and including the information involved in the manufacturing of the segment coils 7. Then, the traceability management method performs management of traceability of the inserted segment coils 7 leading to the slots 3b according to information involved in the slots 3b and the read information involved in the manufacturing of the segment coils 7.

The information involved in the slots 3b is slot identification information to identify the slots 3b of the stator core 3 into which the segment coil 7 is inserted. The information involved in the manufacturing of the segment coil 7 may be manufacturing specification information to specify any one, arbitrary combination, or all of equipment, material, manufacturing condition, and manufacturing date and time to manufacture the segment coil 7, and a shape and weight of the manufactured segment coil 7.

The information-indicating parts 11 are preferably caused to vanish after the reading thereof. More preferably, the information-indicating parts 11 are caused to vanish by welding, insulation coating, or resin encapsulation.

A traceability management device 13 of the present invention includes a reading part 15, and a management part 17. The reading part 15 reads the information involved in manufacturing of the segment coils from the information-indicating parts 11. The management part 17 performs management of traceability of the inserted segment coils 7 leading to the slots 3b according to information involved in the slots and the information read by the reading part 15.

The coil end 7a may include a flat face portion 7aa having the information-indicating part 11. The flat face portion 7aa may be provided on a front face, a back face or a side face of the coil end 7a.

The information-indicating part 11 may be a code caused by a depressed mark, printing, or change of color. In this case, the information-indicating part 11 is preferably one indicated through binarization.

In the stator 1, the segment coils 7 are arranged in respective slots 3b of a stator core3, and adjacent coil ends 7a with no insulating layer 7c in the arranged segment coils 7 are joined together. The joining of the coil ends 7a is performed so that part or all of the information-indicating parts 11 are included.

The part of the information-indicating part 11 is preferably 50% or more of the information-indicating part.

### Embodiment

### [Stator]

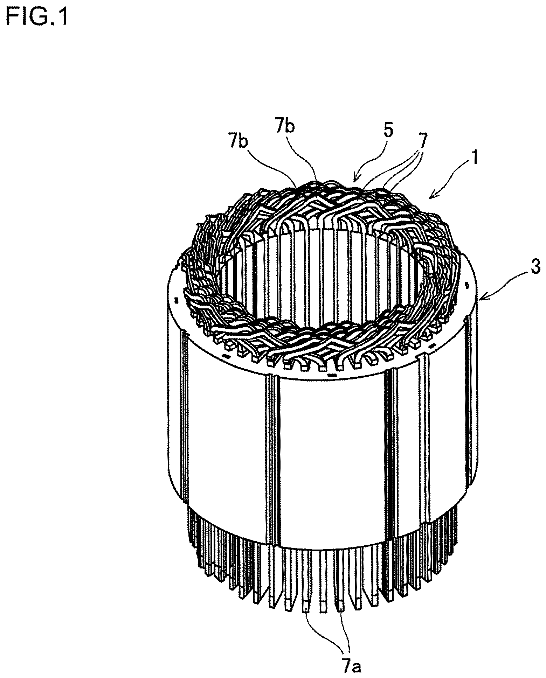

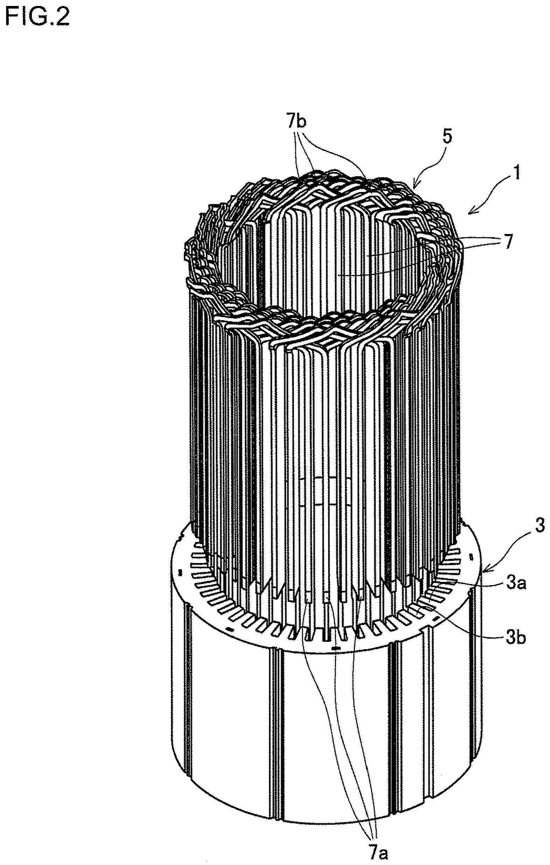

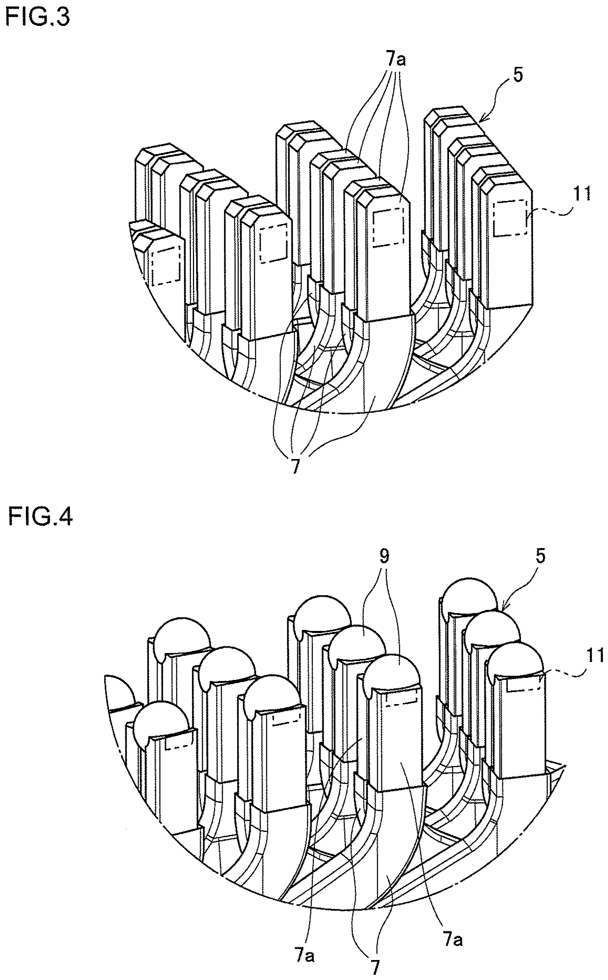

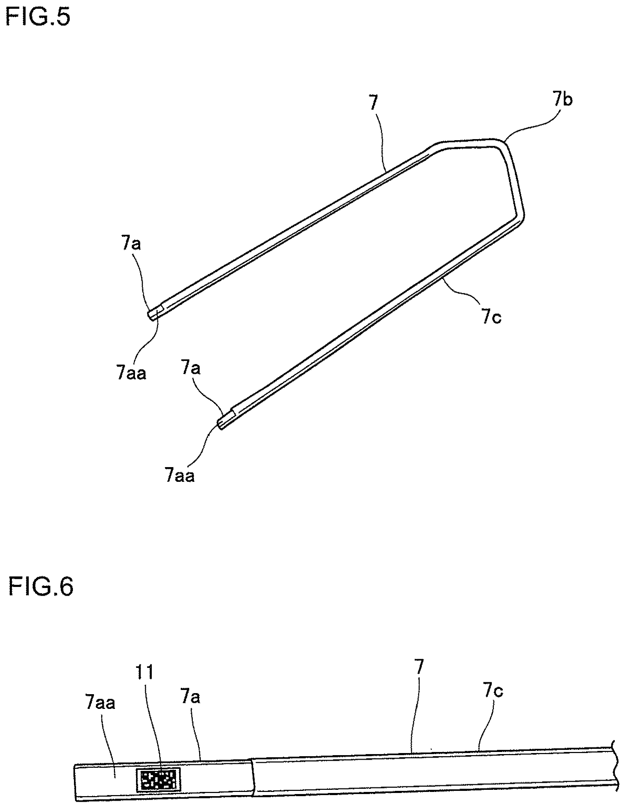

FIG. 1 is a perspective view of a stator of a rotating electrical machine. FIG. 2 is an exploded perspective view of the stator of FIG. 1. FIG. 3 is an enlarged perspective view illustrating coil ends of a stator coil of FIG. 1. FIG. 4 is an enlarged perspective view illustrating welding of the coil ends of FIG. 3. FIG. 5 is a perspective view of a segment coil used for the stator of FIG. 1. FIG. 6 is an enlarged plan view illustrating a coil end of the segment coil of FIG. 5.

A stator 1 of FIG. 1 forms a rotating electrical machine together with a rotor (not illustrated). The rotating electrical machine is formed as, for example, a 3-phase (U-phase, V-phase, W-phase) AC permanent magnet synchronous motor with 8 poles, which drives driving wheels of an electric vehicle which is not illustrated and generates electricity according to regenerative braking force from the driving wheels.

Where, FIG. 1 illustrates a state in which a stator coil 5 is incorporated into a stator core 3 as illustrated in FIG. 2. From the state of FIG. 1, a portion of the stator coil 5 on the coil ends 7a side is subjected to diameter expansion and twisting process and thereafter the coil ends 7a are welded. Then, insulating coating is conducted to the coil ends 7a, resin encapsulation is conducted to a portion of the stator coil 5 and the like to obtain the stator 1 for a rotating electrical machine. In the following explanation, one illustrated in FIG. 1 is regarded as the stator 1 for the explanation as a matter of convenience.

The stator 1 is provided with the stator core 3, and the stator coil 5. The stator core 3 is formed by stacking a plurality of annular electromagnetic steel plates. The stator coil 5 is formed into a wave-winding shape. An end of the stator coil 5 is connected to terminals for three phases not illustrated. The stator coil 5 is composed of a plurality of segment coils 7.

The stator core 3 is provided alternately with a plurality of teeth 3a and a plurality of slots 3b at regular intervals in a circumferential direction (rotational direction of the rotating electrical machine). Each segment coil 7 is inserted into respective slots 3b.

As illustrated in FIG. 1, in each segment coil 7 inserted into respective slots 3b of the stator core 3, the coil ends 7a are projected from an end of the stator core 3. The projected adjacent coil ends 7a are joined together as illustrated in FIG. 4.

The plurality of the segment coils 7 are formed into a U-shape such as a hairpin shape, respectively, and are configured relative to the stator core 3 to be combined in the circumferential direction as illustrated in FIG. 1 and FIG. 5. A terminating end of a first round coil and a starting end of a second round coil are connected by a sub-coil segment not illustrated.

The segment coils 7 are aligned along the circumferential direction and shift to adjacent layers at apex points 7b of the hairpin shapes. The segment coil 7 is set to be inclined on the apex point 7b side of the hairpin shape, so that the segment coils 7 shifted by one pitch bridge to overlap over one on another. The apex points 7b at which the segment coils shift to the adjacent layers are shifted by one pitch, so that the segment coils do not interfere each other to perform crossing to switch an upper one and a lower one. The segment coils shift to layers opposite to the aforementioned layers at welded portions explained later between the adjacent coil ends 7a.

As illustrated in FIG. 4, sets of the coil ends 7a are joined between the adjacent layers with welded portions 9 in a state that a front faces of one coil end 7a faces a back face of the other coil end 7a. The sets of the joined coil ends 7a are aligned with respect to the stator core 3 in the circumferential direction and the diametral direction.

As illustrated in FIG. 5, the segment coil 7 is formed to be forked and be a rectangular cross-section a front face, a back face and side faces of which are flat faces. The front face is a surface on a side having an information-indicating part 11 explained later, and the back face is a back surface in a state that the front face of the segment coil 7 is planarly seen. The side faces are perpendicular to the front face and the back face and span between the front face and the back face. The segment coil 7 is inclined so that the apex portion 7b side of the hairpin shape is protruded toward a front direction.

The segment coil 7 is coated with an insulating layer 7c. The insulating layer 7c is a layer ensuring insulation of the segment coil 7 and is a coating film formed filmy on the segment coil 7 according to the embodiment. The coil ends 7a, therefore, has no insulating layer 7c. The insulating layer 7c is formed on the segment coil 7 excepting the coil ends 7a. The coil ends 7a of the present embodiment are provided with flat face portions 7aa on the front faces. A surface of the flat face portion 7aa is provided flush with the information-indicating part 11.

It should be noted that the information-indicating part 11 is enough to be provided on the coil end 7a and is allowed to be provided on a surface of any of the front face, the back face, the side face, a front end face or the like of the coil end 7. Further, although each segment coil 7 is provided with a pair of the coil ends 7a, the information-indicating part 11 may be provided on one or both of the pair of the coil ends 7a.

The information-indicating part 11 of the present embodiment is an identification code caused by a depressed mark. The information-indicating part 11 is enough to record and indicate manufacturing specification information and may be configured by a one-dimensional code, a two-dimensional code, a Morse code, or the other code.

The depressed mark of the information-indicating part 11 is indicated on the surface of the coil end 7a through binarization according to laser marking. The information-indicating part 11, however, may be indicated through a technique other than binarization.

The binarization of the information-indicating part 11 is configured by a copper color as a material color of the segment coil 7 and a lighter color than the copper color. A rectangular base portion is in the lighter color than the copper color, and a code portion of the copper color is formed on the base portion in relief. The base portion of the lighter color than the copper color is implemented by any one or both of a way of scratching due to irradiation of a laser and temperature management of the irradiation of the laser.

Instead, the information-indicating part 11 may be printing, or change of color with no depressed mark on the surface of the flat face portion 7aa. The change of color is implemented by temperature management of the irradiation of the laser to the flat face portion 7aa. The change of color is not dependent on the depressed mark and means to keep the flat face portion 7aa flat and change to a lighter color or a deeper color than the copper color or the like. If the information-indicating part 11 is indicated by printing, the information-indicating part 11 is directly printed on the flat face portion 7aa. In the case of the printing, the information-indicating part 11 may be binarized into black and white.

It should be noted that the information-indicating part 11 may be provide flush on a surface of a flat face portion of the back face of the coil end 7a. In addition, the flush means there is no protrusion from the surface of the flat face portion 7aa. The case of the information-indicating part 11 being formed by the printing is deemed to be flush with the flat face portion 7aa and is different from a case of the information-indicating part being formed by adhesion of a seal. The information-indicating part 11 of the segment coil 7, however, may not be flush with the flat face portion 7aa as long as it includes the information involved in the manufacturing and may be formed by adhesion of a seal or the like.

The information involved in the manufacturing and recorded in the information-indicating part 11 includes the manufacturing specification information to specify any one, arbitrary combination, or all of equipment, material, manufacturing condition, and manufacturing date and time to manufacture the segment coil 17, and a shape and weight of the segment coil. The information-indicating part 11 may additionally record other information. The other information may be producer information to identify a producer who produces material and the like. The other information may be information other than the information involved in the manufacturing.

As illustrated in FIG. 4, the joining of the coil ends 7a with no insulating layer 7c is conducted by the welded portion 9 to the stator 1 of the rotating electrical machine of FIG. 1 so that the information-indicating parts 11 are included. The joining including the information-indicating parts 11 means that the welded portion 9 causes part or all of the information-indicating parts 11 to vanish as is apparent from the states before and after the joining of FIG. 3 and FIG. 4.

The part of the information-indicating part 11 is 50% or more of the information-indicating part as a standard. This is because that a two-dimensional code is readable even if 30% thereof is vanished. Namely, the vanishing of the information-indicating part 11 means to make the information-indicating part 11 not readable. The information-indicating part 11 may be, therefore, caused to vanish by insulating coating or the like before joining the coil ends 7a. The joining of the coil ends 7a may not, however, cause the part or all of the information-indicating parts 11 to vanish.

The joining of the coil ends 7a with no insulating layer 7c is performed while the front face of one coil end 7a and the back face of the other coil end 7a are connected. The information-indicating part 11 provided on the front face of the pair of the coil end 7a is, therefore, connected to and covered with the facing back face of the coil end 7a. The pair of the coil ends 7a are joined therebetween with the welded portion 9.

It should be noted that the part or all of the information-indicating parts 11 may be eliminated by the welded portion 9.

If, however, the information-indicating parts 11 are not vanished by the welded portion 9, the information-indicating part 11 provided on the front face of one of the pair of the coil ends 7a is covered with the back face of the other of the same. If the information-indicating parts 11 are not between (inside of) the connected coil ends 7a, but on the outside of the connected coil ends 7a, the insulating coating or the resin encapsulation is conducted to the coil ends 7a in the stator 1, thereby to cause the information-indicating part to vanish.

### [Traceability management method]

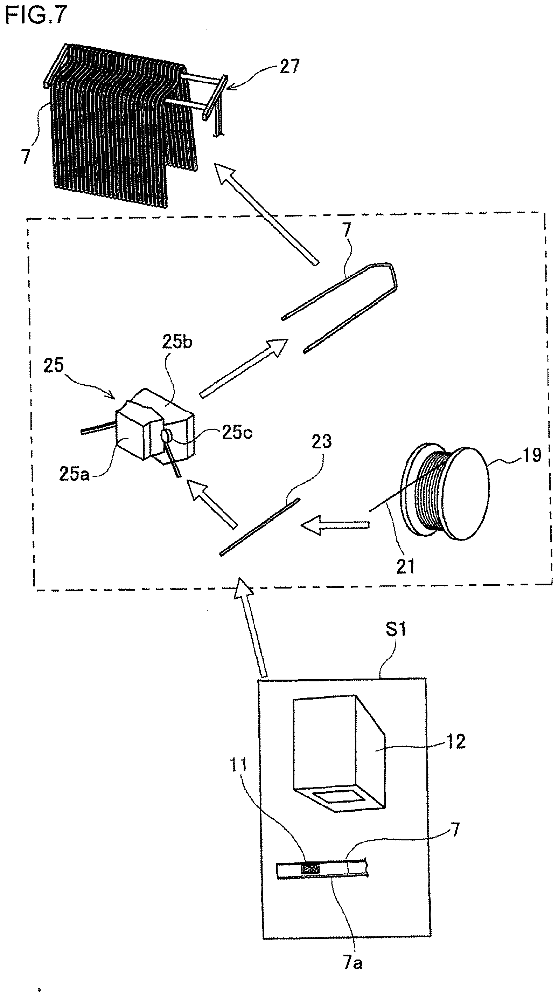

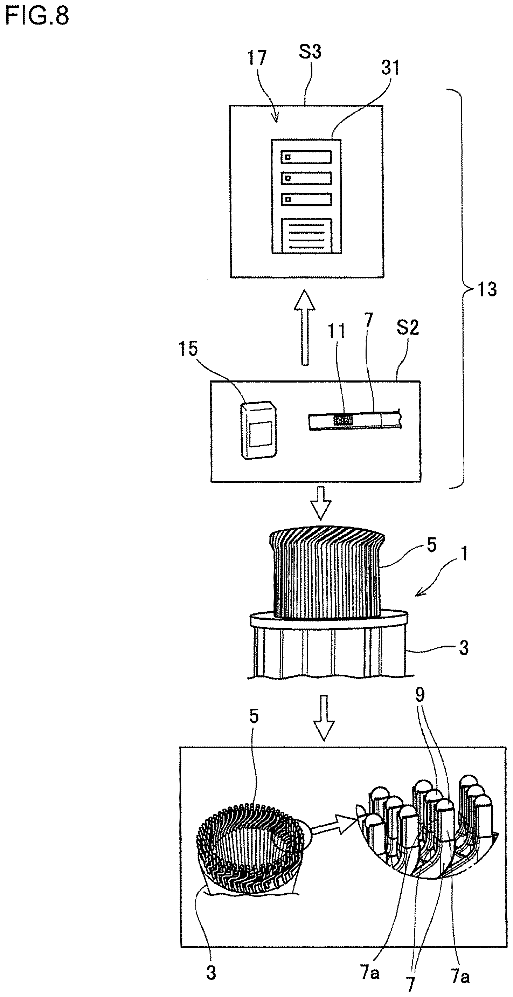

FIG. 7 is a schematic process diagram until the segment coil is manufactured and stored in a cassette. FIG. 8 is a schematic process diagram when assembling the stator of a rotating electrical machine using segment coils on the cassette.

The process of FIG. 7 is provided with an identification-code-marking step S1 for the traceability management method. The process of FIG. 8 is provided with a reading step S2 and a management step S3 of the traceability management method. The identification-code-marking step S1 of FIG. 7 is conducted at a laser-making device 12. The reading step S2 of FIG. 8 is conducted at a reading part 15 of a traceability management device 13. The management step S3 is conducted at a management part 17 of the traceability management device 13.

According to the present embodiment, the information-indicating part 11 is vanished after reading the information-indicating part to make the information-indicating part impossible. The vanishing of the information-indicating part 11 is caused by the welding, the insulating coating, the resin encapsulation or the like as mentioned above.

Where, the identification-code-marking step S1 will be explained together with the manufacturing of the segment coil 7 with the use of FIG. 7. Further, the reading step S2 and the management step S3 will be explained together with the assembling the stator 1 with the use of FIG. 8.

As illustrated in FIG. 7, when manufacturing the segment coil 7, coil wire material 19 is set. The coil wire material 19 is a conductive metal wire with a rectangular cross-section, is entirely coated with the insulating layer 7c and wound in a coil shape.

A wire material 21 is fed from the set coil wire material 19 by an uncoiler while removing a warp. This breaks the warp in a horizontal and a vertical directions to make the wire material 21 straight.

A cut wire material 23 cut with a length by one shot required to be a segment coil 7 is taken out from the straight wire material 21. Next, the insulating layer 7c is peeled off at portions corresponding to coil ends 7a of the cut wire material 23 of the one shot.

The cut wire material 23 of the one shot in which the insulating layer 7c for the coil ends 7a is peeled off is fed to a hairpin-forming device 25.

The hairpin-forming device 25 holds the fed cut wire material 23 between molds 25a and 25b to form the apex portion 7b in the hairpin shape. In this state, the cut wire material 23 is bent by rollers 25c into the U-shape to manufacture the segment coil 7. It should be noted that the method of manufacturing the segment coil 7 is an example and is not limited particularly.

The manufactured segment coil 7 is stored on the cassette 27. A plurality of segment coils 7 sequentially manufactured are gathered on the cassette 27.

According to the present embodiment, the identification-code-marking step S1 is conducted since the cur wire material 23 is formed until the segment coil 7 is stored on the cassette 27. The identification-code-marking step S1 marks the information-indicating part 11 onto the coil end 7a of the cut wire material 23 or the segment coil 7 from which the insulating layer 7c is peeled off using the laser-marking device 12. It should be noted that the information-indicating part 11 may be formed by pressing, cutting or the like without the laser-making device 12. The information-indicating part 11 may be formed by appropriate device and method according to a kind of the depressed mark, the change of color, the printing or the like.

The information included in the information-indicating part 11 is the manufacturing specification information as mentioned above.

The information of the equipment of the manufacturing specification information is equipment specification information containing that the segment coil 7 is formed to be manufactured by which hairpin-forming device 25 in a plurality of manufacturing lines, for example. The information of the material of the manufacturing specification information is material specification information indicating material, i.e. a lot of the coil wire material 19 used for manufacturing the segment coil 7. The information of the manufacturing condition of the manufacturing specification information is information of the number of shots, setting information of the equipment, information of jigs and tools and the like. The information of the number of shots indicates taking-out order of the cut wire materials 23 of the segment coils 7 formed by the hairpin-forming device 25 from the wire material 21. The setting information of the equipment contains a setting of the hairpin-forming device 25. The information of jigs and tools is information to identify used jigs and tools. The information of the date and time of the manufacturing specification information is manufacturing-date-and-time specification information containing time (date and time and the like) to manufacture the segment coil 7 formed by the hairpin-forming device 25. The information of the shape of the manufacturing specification information is shape specification information indicating a shape of the segment coil 7, which the segment coil 7 formed by the hairpin-forming device 25 is in the hairpin shape or the segment coil formed by the other device is in the U-shape. The information of the weight of the manufacturing specification information is weight information containing weight of the segment coil 7 formed by the hairpin-forming device 25.

The manufactured segment coil 7 is in the hairpin shape as mentioned above and is provided flush with the information-indicating part 11 on the flat face portion 7aa of the coil end 7a as illustrated in FIG. 5 and FIG. 6. The information-indicating part 11 is provided on the coil end 7a itself instead of the insulating layer 7c, so that it suppresses quality deterioration of the segment coil 7 due to damage of the insulating layer 7c or the like. Further, the information-indicating part 11 is provided on the coil end 7a itself, so that the information-indicating part has high durability and is suppressed from damage due to contact or the like.

The cassette 27 is fed to an assembling step of the stator coil 5. The assembling step assembles the segment coils 7 of the cassette 27 as the stator coil 5. The assembling step may use a special assembling device or the like.

As illustrated in FIG. 8, the assembled stator coil 5 is inserted into the stator core 3. It should be noted that the segment coils 7 may be inserted into the slots 3b one by one to be assembled to the stator core 3.

In the stator coil 5 inserted into the stator core 3, adjacent coil ends 7a are joined by the welded portions 9 as illustrated in FIG. 3 and FIG. 4. Although the adjacent coil ends 7a in the present embodiment means adjacent coil ends 7a between adjacent layers, the adjacent coil ends are not limited thereto.

According to the present embodiment, the manufacturing specification information is read from the information-indicating part 11 of the segment coil 7 as the information involved in the manufacturing of the segment coil 7 in the reading step S2 of FIG. 8.

The reading of the information-indicating part 11 is conducted by a two-dimensional code reader 15 as the reading part of FIG. 8. It should be noted that the reading part may employ an appropriate one according to the kind of the information-indicating part 11. The reading of the information-indicating part 11 using the two-dimensional code reader 15 is conducted when the segment coil 7 is picked up from the cassette 27 to assemble the stator coil 5.

It should be noted that, when directly assembling the segment coils 7 to the stator core 3 one by one, the reading using the two-dimensional code reader 15 is performed at that time.

The manufacturing specification information of the information-indicating part 11 read by the two-dimensional code reader 15 is uploaded to a server 31 of the managing part 17 from the two-dimensional code reader 15 through a wired or wireless network such as LAN or the like not illustrated. In addition, the server 31 is composed of a computer having a processor and memories.

The management step S3 conducts management for traceability of the inserted segment coil 7 leading to the slots 3b based on information involved in the slots 3b and the information read in the reading step S2.

In the management step S3 of the present embodiment, the information involved in the slots 3b is slot specification information to specify the slots 3b of the stator core 3 into which the segment coil 7 is inserted. Based on the slot specification information, the slots 3b and the stator core 3 into which the segment coil 7 is inserted are specified.

The slot specification information may be obtained from the assembling device or the like as a relation between the segment coil 7 of the assembled stator coil 5 and the slots 3b of the stator core 3 to which the stator coil is assembled. Instead, a worker may input information of the slots 3b into which the segment coil 7 is inserted through a terminal. The obtained slot specification information is uploaded to the management part 17 through the network or the like.

The management of the management step S3 is conducted based on recorded information in the server 31 of the management part 17. Namely, the management part 17 manages the traceability of the stator 1 for the manufacturing time, the shape, the weight and the like of the segment coils 7 manufactured using the stator core 3 and the slots 3b into which the segment coils 7 are inserted, the hairpin-forming device 25 manufacturing the segment coils 7, the materials by which the segment coils 7 are manufactured, and the manufacturing conditions such as the taking-out order of the cut wire materials 23 by which the segment coils 7 are manufactured.

As mentioned above, the traceability management method and device 13 of the present embodiment manages the traceability of the segment coil 7 based on the reading of the information-indicating part 11 of the segment coil 7 and the uploading of the slot specification information and the manufacturing specification information to the server 31.

Namely, it manages the traceability of the stator 1 for the manufacturing time, the shape, and the weight and the like of the segment coils 7 manufactured using the stator core 3 and the slots 3b into which the segment coils 7 are inserted, the hairpin-forming device 25 manufacturing the segment coils 7, the materials by which the segment coils 7 are manufactured, and the taking-out order of the cut wire materials 23 by which the segment coils 7 are manufactured and the like.

The traceability of each segment coil 7 is, therefore, ensured relative to the slots 3b of the stator core 3 even if pieces of the segment coils 7 are taken out from the plurality of the segment coils when the segment coils 7 are stored on the cassette 27, even if the order of the segment coils 7 is changed on the cassette 27, or even if the order of the cassettes 27 are changed.

The stator 1 to which the segment coils 7 are assembled is, therefore, managed even if an unexpected situation such as taking-out of the segment coil 7 from the cassette 27 or replacement of the cassettes 27 is occurred. Further, the order of the segment coils 7 is rearranged through the reading of the contents of the information-indicating part 11 to assemble the segment coils to the stator core 1 as design.

With the ensuring of the traceability, it is easy that different segment coils 7 manufactured by different equipment are intermixed. Een if such intermixing is occurred, the stator 1 and the segment coils 7 assembled thereto are managed.

Further, in the present embodiment, the information-indicating part 11 is provided on the coil end 7a with no insulating layer 7c, so that quality deterioration of the segment coil 7 is suppressed.

The traceability management method of the present embodiment causes the information-indicating part 11 to vanish after the reading thereof and accordingly suppresses information leak to improve security.

The segment coil 7 is provided with the information-indicating part 11 on the coil end 7a of the segment coil 7 with no insulating layer 7c, so that it suppresses damage of the insulating layer 7c when setting the information-indicating part 11. Further, the information-indicating part 11 is provided on the coil end 7a itself and accordingly is suppressed from damage by comparison with the case of the information-indicating part provided on the insulating layer 7c.

Further, the coil end 7a is vanished partly or entirely by the welding or is a portion covered with the insulating coating, so that the information-indicating part 11 is vanished naturally according to the manufacturing process.

The coil end 7a has the information-indicating part 11 on the flat face portion 7aa, so that the information-indicating part 11 is easily marked by the laser-marking device 18. Further, the reading of the information-indicating part 11 is surely and easily conducted by the two-dimensional code reader 15 in the reading step S2.

The manufacturing specification information included in the information-indicating part 11 is any one, arbitrary combination, or all of the hairpin-forming device 25, the material and the lot of the coil wire material 19, the manufacturing condition of the hairpin-forming device 25, and the manufacturing date and time to manufacture the segment coil 7, and the shape and the weight of the segment coil 7. The information-indicating part 11 is, therefore, used for the management of the traceability of the stator 1 for, for example, the hairpin-forming device 25, the material, the condition, and the date and time to manufacture the segment coil 7, and the shape and the weight of the segment coil 7.

The information-indicating part 11 is the two-dimensional code caused by the depressed mark, the printing, or the change of color, and is easily arranged on the coil end 7a of the segment coil 7, thereby contributing to the suppressing of the damage of the insulating layer 7c.

The information-indicating part 11 is indicated by the depressed mark on the flat face portion 7aa of the coil end 7a through binarization using the laser marking, so that the reading of the information-indicating part is surely conducted by the two-dimensional code reader 15 to contribute to the accurate management of the traceability.

In the stator 1 of a rotating electrical machine, part or all of the information-indicating parts 11 are vanished by the welding portion 9 of the coil ends 7a with no insulating layer 7c, it easily improves security while conducting the management of the traceability.

### DESCRIPTION OF NUMERALS

1 Stator
3 Stator core
3b Slot
7 Segment coil
7a Coil end
7aa Flat face portion
7c Insulating layer
9 Welding portion
11 Information-indicating part
13 Traceability management device
15 Two-dimensional code reader (Reading part)
17 Management part

## Claims

1. A traceability management method for a stator of a rotating electrical machine in which coil ends with no insulating layer in segment coils inserted into slots are joined together, comprising:
reading information from information-indicating parts being provided on the coil ends and including the information involved in manufacturing of the segment coils; and
performing management of traceability of the inserted segment coils leading to the slots according to information involved in the slots and the read information.

2. The traceability management method according to claim 1 wherein
the information involved in the slots is slot identification information to identify the slots of the stator core into which the segment coil is inserted, and
the read information is manufacturing specification information to specify any one, arbitrary combination, or all of equipment, material, manufacturing condition, and manufacturing date and time to manufacture the segment coil, and a shape and weight of the manufactured segment coil.

3. The traceability management method according to claim 1 or 2, further comprising:
causing the information-indicating parts to vanish.

4. The traceability management method according to claim 3 wherein
the information-indicating parts are caused to vanish by welding, insulation coating, or resin encapsulation.

5. A traceability management device for a stator of a rotating electrical machine in which coil ends with no insulating layer in segment coils inserted into slots are joined together, comprising:
a reading part that reads information from information-indicating parts being provided on the coil ends and including the information involved in manufacturing of the segment coils; and
a management part that performs management of traceability of the inserted segment coils leading to the slots according to information involved in the slots and the information read by the reading part.

6. The traceability management device according to claim 5 wherein
the information involved in the slots is slot identification information of the slots of the stator core into which the segment coil is inserted, and
the information read in the reading step is manufacturing specification information to specify any one, arbitrary combination, or all of equipment, material, manufacturing condition, and manufacturing date and time to manufacture the segment coil, and a shape and weight of the manufactured segment coil.

7. A segment coil having a U-shape and being used for a stator coil of a stator of a rotating electrical machine, comprising:
a coil end with no insulating layer; and
an information-indicating part being provided on a surface of the coil end.

8. The segment coil according to claim 7 wherein
the coil end includes a flat face portion having the information-indicating part.

9. The segment coil according to claim 7 wherein
the flat face portion is provided on a front face, a back face or a side face of the coil end.

10. The segment coil according to claim 7 wherein
the information-indicating part includes manufacturing specification information to specify any one, arbitrary combination, or all of equipment, material, manufacturing condition, and manufacturing date and time to manufacture the segment coil, and a shape and weight of the manufactured segment coil.

11. The segment coil according to claim 7 wherein
the information-indicating part is an identification code caused by a depressed mark, printing, or change of color.

12. The segment coil according to claim 11 wherein
the information-indicating part is indicated through binarization.

13. A stator of a rotating electrical machine using the segment coil according to claim 7 wherein
the segment coils are arranged in respective slots of a stator core, and
adjacent coil ends with no insulating layer in the arranged segment coils are joined together, and part or all of the information-indicating parts are caused to vanish by the joining of the coil ends.

14. The stator of the rotating electrical machine according to claim 13 wherein
the part of the information-indicating part is 50% or more of the information-indicating part.
